Europäisches Patentamt

European Patent Office

Office européen des brevets

(11) Numéro de publication : **0 348 434 B1**

(12) FASCICULE DE BREVET EUROPEEN

(45) Date de publication du fascicule du brevet :
23.09.92 Bulletin 92/39

(51) Int. Cl.⁵ : **G06F 15/72**

(21) Numéro de dépôt : **88903282.7**

(22) Date de dépôt : **12.04.88**

(86) Numéro de dépôt international :
**PCT/FR88/00177**

(87) Numéro de publication internationale :
**WO 88/08169 20.10.88 Gazette 88/23**

(54) PROCEDE DE REPRESENTATION D'IMAGES DE VUES D'UN OBJET.

(30) Priorité : **17.04.87 FR 8705487**

(43) Date de publication de la demande :
**03.01.90 Bulletin 90/01**

(45) Mention de la délivrance du brevet :
**23.09.92 Bulletin 92/39**

(84) Etats contractants désignés :
**DE GB IT NL**

(56) Documents cités :
**IEEE Transactions on Medical Imaging, vol. MI-5, no. 1, mars 1986, IEEE (New York, US), K.H. Höhne et al.: "Shading 3D imagesfrom CT using gray-level gradients", voir pages 45-47**

(56) Documents cités :
**Proceedings of the IEEE, vol. 71, no. 3, mars 1983, IEEE (New York, US), J.K. Udupa: "Display of 3D information in discrete3D scenes produced by computerized tomography", pages 420-431, voir page 426, colonne de droit, ligne 3 - page 429, colonne degauche, ligne 38**

(73) Titulaire : **GENERAL ELECTRIC CGR S.A.**
**13, Square Max-Hymans**
**F-75015 Paris (FR)**

(72) Inventeur : **LIS, Olivier**
**36, rue Miolis**
**F-75015 Paris (FR)**

(74) Mandataire : **Ballot, Paul Denis Jacques**
**Cabinet Ballot-Schmit, 7, rue le Sueur**
**F-75116 Paris (FR)**

EP 0 348 434 B1

Jouve, 18, rue Saint-Denis, 75001 PARIS

**Description**

La présente invention a pour objet un procédé de représentation d'images de vues d'un objet. Cet objet est à discriminer dans un volume numérique. Un volume numérique résulte de l'acquisition et du stockage d'informations concernant des caractéristiques physiques de parties internes d'un corps examiné. Le mode le plus connu d'acquisition de ces informations est le mode tomographique. Celui-ci peut être excécuté, en particulier dans le domaine médical, par divers moyens : résonance magnétique nucléaire, tomodensitométrie par rayons X, ou tomographie par gammagraphie ou par ultrasons. Ce mode d'acquisition peut bien entendu être aussi quelconque du moment qu'il conduit à une collection d'informations physiques, que l'on peut arranger virtuellement les unes par rapport aux autres selon trois axes orthogonaux de référence, et qui sont censées représenter, dans la position virtuelle qu'elles occupent, les caractéristiques physiques de parties correspondantes dans un corps examiné. Chaque élement de volume de ce volume numérique comporte donc au moins deux types d'informations. Un premier type concerne les coordonnées d'un endroit correspondant dans le corps (correspondant bi-univoquement à une adresse dans une mémoire de stockage d'un ordinateur). L'autre type représente la valeur de l'information physique affectée à cet endroit et qui a été mesurée, par exemple par l'une des techniques de tomographie évoquées ci-dessus.

Des techniques de représentation d'images de vues d'objet à discriminer dans des volumes numériques sont déjà connues. Il en existe principalement deux. Une première technique développée principalement par G.T. HERMAN et son équipe comporte la succession des opérations suivantes. A partir d'un volume numérique donné, éventuellement reformaté pour que la résolution soit identique dans les trois dimensions de l'espace, on effectue d'abord une segmentation. Le principe de la segmentation consiste à comparer les valeurs des informations physiques chargées dans chacun des éléments de volume à une valeur de référence et à retenir parmis ces éléments de volume ceux dont la valeur de l'information physique appartient, par exemple, à une plage de valeur située autour de cette valeur de référence. Pour simplifier, en tomodensitomètrie, on peut comprendre qu'un test sur la densité va permettre de différencier dans le volume numérique les éléments de volume correspondant à des os (densité forte) et les éléments de volume correspondant à des tissus mous (densité faible). On peut alors disposer d'une collection d'adresses de cellules mémoire correspondant à des éléments de volume choisis et dont l'ensemble définit l'objet ainsi segmenté.

Le principe de la représentation consiste ensuite à attribuer à chacun des éléments de volume choisis (mais situés à la surface de l'objet segmenté) une surface visible, à calculer l'orientation de cette surface (à en estimer une orientation de la normale), et à évaluer la contribution lumineuse de cette surface à une image de vue lorsque cette surface est soumise à un éclairement donné (c'est à dire à un éclairement provenant par exemple d'un point précis de l'espace extérieur à l'objet segmenté). Connaissant les lieux des éléments de volume choisis, et donc des surfaces visibles correspondantes, on peut leur attribuer dans l'image de la vue à représenter des éléments de surface de cette image dont les coordonnées dans l'image dépendent du point de vue à partir duquel on regarde l'objet segmenté. On affecte alors ces éléments de surface d'une luminosité représentative des contributions des surfaces visibles auxquelles elles sont affectées. L'ensemble de tous les éléments de surface de l'image constitue l'image de la vue de l'objet.

Cette méthode présente des inconvénients, en particulier l'ombrage n'y est pas satisfaisant. L'image obtenue présente en effet des artefacts de ligne ou de cercle qui semblent épouser des courbes de niveau de l'objet segmenté, et ceci quelle que soit l'orientation de l'éclairement, et quel que soit le point de vue d'observation de cet objet. Ces artefacts de courbes de niveau sont particulièrement décelables dans la représentation des surfaces avec peu de relief. Si on peut à la rigueur sien satisfaire, en les éliminant mentalement lors de l'examen de la vue représentée, on ne peut nier que ces mêmes défauts apparaissent dans des parties plus tourmentées, avec plus de relief, des vues présentées. Pour ces parties, il devient alors impossible de distinguer dans l'image ce qui est la représentation vraie et ce qui est l'artefact.

Cette méthode présente en plus un autre inconvénient qui est lié au calcul de l'orientation des surfaces visibles. En résumé la segmentation conduit à affecter aux éléments de volume choisis et à ceux qui sont écartés une information binaire : par exemple respectivement 1 ou 0. Le calcul de l'orientation de la surface visible affectée à un élément de volume choisi est classiquement effectué en tenant compte de la répartition, dans les éléments de volume directement voisins de l'élément de volume choisi, des 1 et 0. Ceci conduit d'une part à un nombre limité de possibilités d'orientation de cette surface (81 orientations possibles si on prend les 26 éléments de volume directement voisins de l'élément de volume choisi), surtout si l'on tient compte du fait qu'à cause du point de vue d'observation ce nombre de possibilités est divisé par deux. D'autre part ce calcul conduit dans certains cas limite à montrer une scintillation dans l'image. En effet si l'information physique testée pour un ensemble d'éléments de volume adjacents est très proche de la limite de la plage de segmentation, certains de ces éléments de volume seront choisis et d'autres pas. Il peut en résulter un profil crénelé de l'objet segmenté à cet endroit alors que son allure vraie peut être lisse, mais située en valeur d'information physique à un niveau gênant compte tenu du critère retenu pour faire la segmentation. Et ce profil crenelé provoque le scintillement de l'image.

Une autre technique de représentation, dérivée des techniques de synthèse d'images et de conception assistée par ordinateur, a pour objet d'effectuer une segmentation dans des plans mémoire du volume mémoire qui correspondent à des coupes du volume numérique. Par exemple toutes les coupes perpendiculaires à un axe donné (un axe Z) sont segmentées. Dans toutes ces coupes, par des méthodes de corrélation, on peut tracer un contour "lissé" de la coupe de l'objet segmenté. On associe ensuite dans une opération ultérieure les contours appartenant à chacune des coupes adjacentes de manière à déterminer des facettes de dimensions choisies, en général triangulaires. Une facette triangulaire est par exemple définie par trois points, deux appartenant à un contour dans une coupe, un troisième appartenant, en position intermédiaire, à un contour dans une coupe adjacente. La position de chaque facette est connue et on peut lui faire correspondre, dans l'image visualisée, un élément de surface de cette image. On calcule également pour ces facettes les contributions lumineuses, et on construit ensuite l'image de la vue. Cette technique présente, à un dégré moindre cependant, les inconvénients précédents. Les artefacts de courbes de niveau sont quand même présents quand ces courbes de niveau sont alignées selon l'axe auquel sont perpendiculaires les coupes utilisées. En outre, cette autre technique présente un gros inconvénient: elle est lourde à mettre en oeuvre par des ordinateurs classiques. Elle n'est pratiquement envisageable que si le nombre des facettes à représenter dans l'image est limité à 5 000 ou 10 000 facettes. Or pour des images médicales, ou plus généralement pour des images représentant des objets inconnus à reconnaître (et non pas des objets symboliques utilisables en simulation) le nombre des facettes à représenter est de l'ordre de 500 000 à 1 000 000. Les temps de calcul relatifs à cette technique ne sont plus alors acceptables.

La présente invention a pour objet de remédier à ces inconvénients en proposant une représentation dans laquelle on ne tient plus compte de la surface de l'objet segmenté tel qu'il a pu être déterminé à l'issue de la segmentation. Dans la représentation de l'invention, on tient compte au contraire de la normale à la surface de l'objet réel, donc detérminée vraiment par la partie correspondante du corps examiné, pour consituter l'ensemble des surfaces visibles à représenter. Ainsi, quand le critère de segmentation est limite pour discriminer des éléments de volume qui appartiendraient ou qui n'appartiendraient pas à l'objet segmenté, on obtient un effet automatique de lissage de la représentation à cet endroit en s'intéressant par exemple au gradient de la valeur de l'information physique chargée dans ces éléments de volume, puisque ce gradient ne fluctue pas par tout ou rien d'un élément de volume à l'autre (sauf pour les parties du corps fortement différenciées : les os par rapport au tissus mous). Autrement dit la représentation des formes des tissus à caractéristiques physiques voisines est améliorée. De plus, pour améliorer l'artefact lié aux problèmes de changement de niveau on utilise tout simplement les gradients d'informations physiques d'éléments de volume voisins des éléments de volume segmentés à la surface de l'objet segmenté.

Dans un document IEEE, Transactions on Medical Imaging Vol. MI-5, N° 1, mars 1986, pages 45-46, on préconise d'utiliser des composants des gradients. Cependant l'utilisation qui en est faite ne permet pas d'éviter les artefacts.

Dans ces conditions la présente invention a pour objet un procédé de représentation d'image de vue d'un objet à discriminer dans un volume numérique, ce volume numérique comportant des éléments de volume, chargés d'au moins une information physique, ce procédé comportant les étapes suivantes :
— on segmente le volume numérique selon un critère de segmentation permettant de choisir des éléments de volume en fonction de la valeur de l'information physique dont ils sont chargés et de manière à extraire ainsi de ce volume numérique un objet segmenté,
— on attribue à chaque élément de volume choisi et situé à la surface de l'objet segmenté une surface visible,
— on évalue la contribution de cette surface à la vue à représenter,
— on construit une image lumineuse avec des éléments de surface, dont les lieux dans l'image représentent les lieux dans l'objet segmenté des éléments de volume choisis et situés à la surface de cet objet segmenté, et dont les luminosités représentent les contributions des surfaces visibles attachées à ces éléments choisis, et situés à la surface
caractérisé en ce que :
— on attribue comme surface visible à chaque élément de volume choisi et situé à la surface de l'objet segmenté, les facettes de cet élément au contact de l'environnement, intérieur ou extérieur, de cette surface de l'objet segmenté, et en ce que on évalue la contribution de chacune de ces facettes des éléments de volume choisis et situées à la surface de l'objet segmenté en fonction du gradient vrai et intrinsèque de l'information physique, à l'endroit des éléments de volume correspondant, ce gradient étant indépendant d'une direction d'éclairement de ces facettes.

On pourra montrer qu'on peut ainsi attribuer comme surface visible à chaque élément de volume choisi l'ensemble des facettes apparentes de cet élément de volume, qui n'appartiennent par ailleurs à aucun autre élément de volume de l'objet segmenté. Dans un perfectionnement, l'évaluation de la contribution des surfaces visibles d'un élément de volume est même faite à partir des gradients d'information physique à l'endroit des éléments de volume correspondants ainsi qu'à l'endroit des éléments de volume situés au voisinage de ces éléments de volume correspondants.

L'invention sera mieux comprise à la lecture de la description qui suit et à l'examen des figures qui l'accompagnent. Celles-ci ne sont données qu'à titre indicatif, et nullement limitatif de l'invention. En particulier elles ne concernent que les parties essentielles de l'invention. Les figures montrent :

figures 1a et 1b : un volume numérique et la surface d'un objet segmenté dans ce volume;

figure 2 : une comparaison entre le profil de l'objet segmenté et le profil de la surface réelle.

figures 3a à 3d : un exemple préféré de calcul de gradient ;

figures 4 et 5a et 5b : les particularités de calcul du gradient en tenant compte des facettes apparentes de l'objet segmenté.

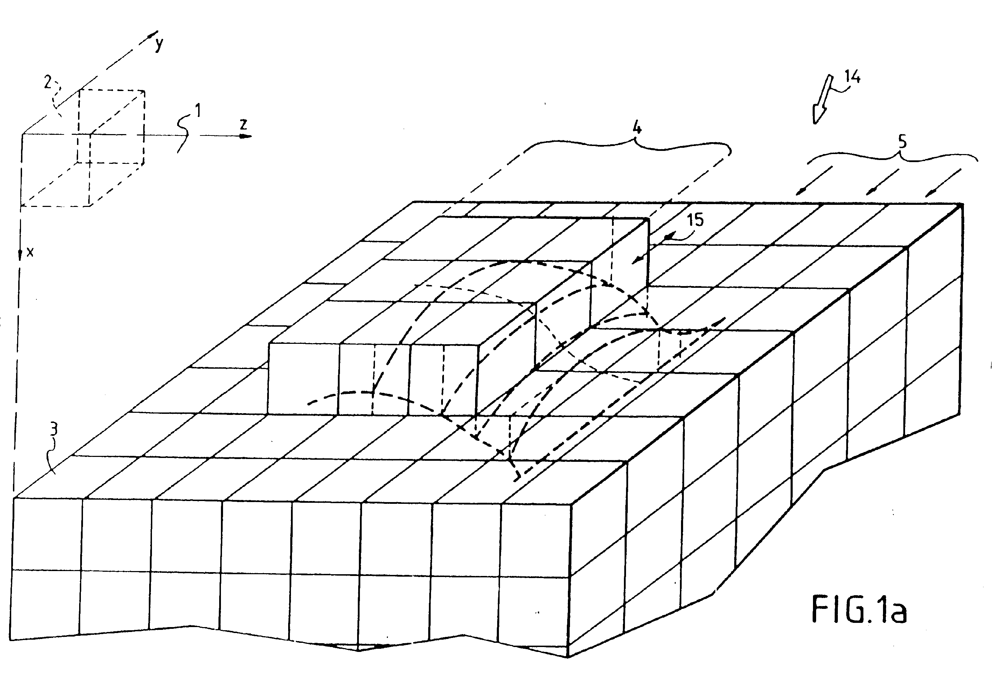

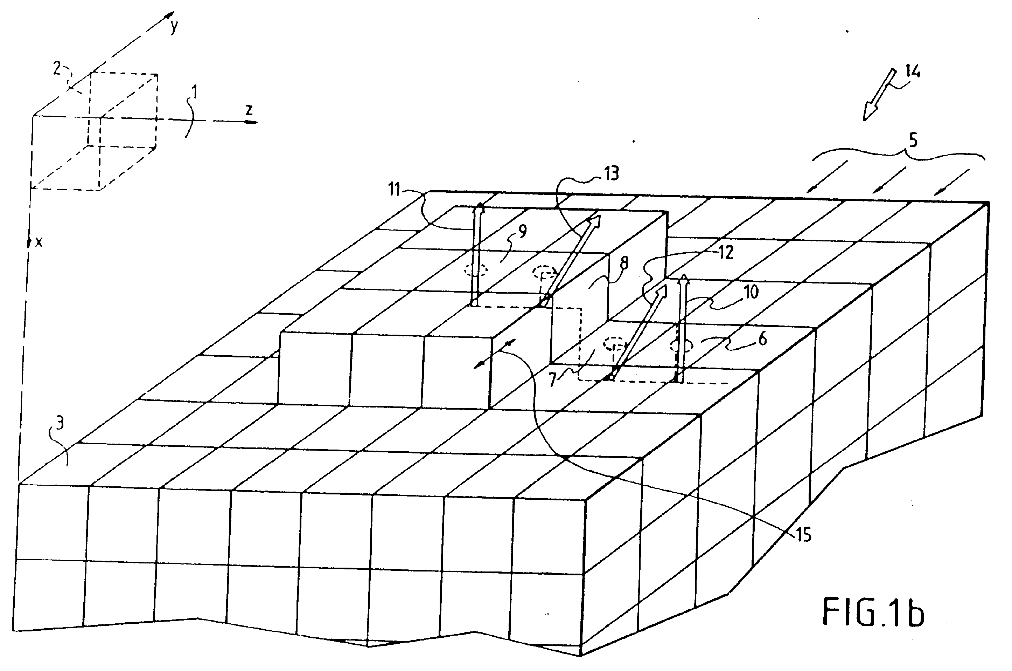

La figure 1a montre un volume numérique 1 rappelé schématiquement par trois axes orthogonaux X, Y, Z de référence. Il symbolise une partie du volume d'un corps examiné (non représenté) dans lequel l'acquisition des informations physiques a été entreprise. Après segmentation, selon des procédés connus, le volume numérique 1 a pris une allure binaire. Des éléments de volume tels que 2, dans lesquels l'information physique chargée ne répondait pas au critère de segmentation, ont été affectés d'un poids binaire donné (içi 0) tandis que d'autres éléments de volume, tels que 3, au contraire ont été affectés d'un poids binaire différent (içi 1) parce qu'ils étaient censés représenter des parties de l'objet à discriminer dans le corps. La figure la montre en outre, en gros tirets, une partie de la surface vraie d'une partie du corps examiné ayant donné lieu à la segmentation. Cette surface présente une protubérance 4 qui émerge au-dessus d'une face plane 5. La figure 1b montre, pour les mêmes éléments la manière dont ont été calculées les orientations des surfaces représentatives attribuées aux éléments de volume" choisis du fait de la segmentation. Avec ces orientations on évalue leur contribution à l'image. On étudiera plus particulièrement le cas des éléments de volume 6 à 9 qui sont situés à la surface du volume segmenté. Ils sont normalement visibles d'un point de vue situé perpendiculairement au plan de la figure : c'est à dire sensiblement à l'endroit où se trouvent les yeux d'un observateur qui regarde cette figure. Les éléments de volume 6 et 9 sont entourés d'éléments de volume présentant une symétrie par rapport à eux selon des plans XZ ou XY. En conséquence le calcul de la normale à la surface visible des éléments de volume 6 et 9 conduit à la détermination de vecteurs normaux respectivement 10 et 11 qui ne comportent des composantes que selon X. Pour les deux éléments de volume 7 et 8, qui appartiennent au volume segmenté de part et d'autre du changement de niveau par rapport au plan 5, on peut montrer que les calculs classiques basés sur l'allure du volume segmenté (c'est à dire tel qu'il apparaît içi avec son décrochement) conduisent à la détermination de deux normales respectivement 12 et 13 légèrement inclinées. On peut admettre en première approche que les normales 12 et 13 sont sensiblement parallèles l'une à l'autre.

De l'élément de volume 6 à l'élément de volume 7, les normales se rapprochant, on est en présence d'une surface visible d'allure concave. Par contre, de l'élément de volume 8 à l'élément de volume 9, les normales 11 et 13 étant divergentes, on est en présence d'une surface convexe. Si on soumet (mathématiquement) ces éléments de volume 7 à 9 à un éclairement provenant d'une direction 14, par exemple d'orientation ces surfaces respectivement concave et convexe présenteront une luminosité différente l'une de l'autre. De cet écart de luminosité, qui serpente tout le long du front du 15 du décrochement de la protubérance 4 par rapport au plan 5, il résultera dans l'image visualisée un artefact en forme de trait. Alors que dans l'image qu'il aurait fallu montrer, et qui est en partie représentée sur la figure la, à cet endroit, il n'y a pas de rupture de l'inclinaison de la surface de l'objet vrai. Et donc à cet endroit il n'aurait pas fallu montrer un liseré lumineux s'apparentant en quelque sorte à une courbe de niveau.

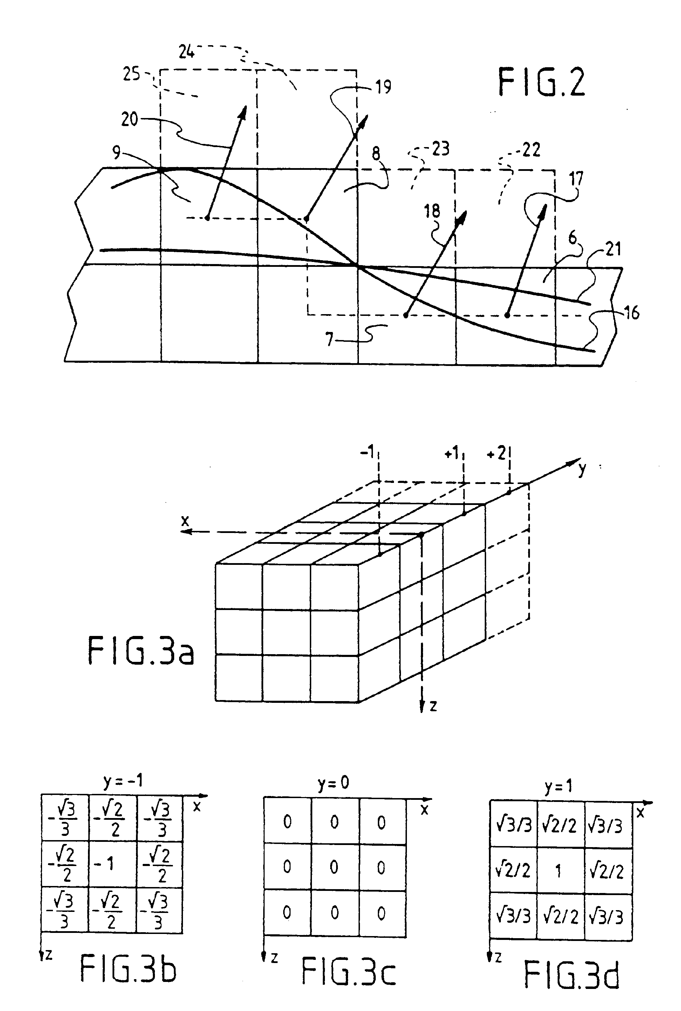

De manière à résoudre cet inconvénient, dans l'invention il est prévu de ne plus calculer les normales aux surfaces des éléments de volume choisis par l'allure de ces surfaces mais de les remplacer par le gradient de l'information physique, à l'endroit de l'élément de volume choisi, et sur laquelle est effectuée la segmentation. Ce faisant, confer figure la, on amortit les effets de désorientation des surfaces à visualiser et on se rapproche de la réalité de la surface vraie de l'objet qu'on a segmenté. La figure 2 montre une coupe de la figure 1a prise, selon un plan X Z, au milieu des éléments de volume 6 à 9. Le contour 16 de la surface de l'objet à représenter est indiqué. Les centres des éléments de volume sont aussi pointés. La normale à la surface visible attribuée à chaque élément de volume de la surface de l'objet segmenté est assimilée à la direction du gradient. On associe à cette orientation de gradient une orientation, perpendiculaire, d'une surface élementaire donnée. Autrement dit, dans la figure 2, on remplace maintenant la surface vraie (16) inconnue par une estimation de surface déterminée comme perpendiculaire au gradient de l'information physique chargée dans les éléments de volume considérés. On constate que les flèches 17 à 20 qui représentent les orientations de ces gradients sont moins déviées les unes des autres que dans le cas représenté sur la figure 1b. En particulier les orientations des gradients 17 et 20 tiennent compte de l'inclinaison de la surface 16 à l'endroit de l'élément de volume dont ils font partie.

Les figures 3a à 3d donnent un exemple du calcul du gradient de l'information physique contenue dans un élément de volume entouré de 26 (3 x 9 = 27 - 1) éléments de volume voisins. Dans un exemple préféré ces gradients sont calculés selon une méthode dite de ZUCKER. Selon cette méthode on calcule chacune des composantes du gradient en faisant intervenir les éléments de volume qui se trouvent dans des plans situés de part et d'autre de cet élément de volume, le long d'un axe parallèle à la composante à calculer. Par exemple, figures 3b à 3d, on cherche à calculer la composante selon l'axe Y et on fait intervenir les éléments de volume situés en avant de l'élément de volume considéré, figure 3b : Y =-1, et on fait intervenir également les éléments de volume situés dans un plan en arrière de l'élément de volume considéré, figure 3d : Y= +1. Les éléments du volume situés, de ce point de vue, dans le même plan que les éléments de volume considérés, figure 3c : Y = O, ne sont pas pris en considération. En outre, chacun des éléments de volume est pris en considération dans chaque cas au prorata de l'inverse de sa distance à l'élément de volume considéré. Pour le calcul des composantes des gradients, on multiplie à chaque fois les coefficients indiqués dans les figures 3b à 3d avec les valeurs des informations physiques contenues dans les éléments de volume respectifs. On effectue ensuite une sommation, pour chaque plan, des participations pondérées de chacun des éléments de volume pris en compte. On soustrait ensuite la valeur obtenue pour le plan avant de la valeur obtenue pour le plan arrière. La différence, une fois normalisée, détermine la composante du gradient. On agit de même avec les deux autres composantes X et Z, du gradient de manière à déterminer dans l'espace à trois dimensions l'orientation de ce gradient.

La figure 2 permet de se rendre compte que le contour vrai 16 serpente entre les centres des éléments de volume appartenant à la surface de l'objet segmenté. Il est nécessaire alors de se rappeler qu'on a affaire à une information physique. L'information physique sur laquelle la segmentation est faite n'est pas une information physique évoluant brutalement à l'endroit du passage d'un milieu à un autre, dans un corps étudié. Par exemple d'un tissu mou, la matière grise, à un autre tissu mou, la matière blanche (dans le cerveau humain) la transition n'est pas brutale. Si on accepte de parler en terme de densité, que celle ci soit mesurée par rayonnement X ou par résonance magnétique nucléaire, on approche une définition de la surface de l'objet segmenté comme étant une surface d'isodensité. Et à l'endroit où les gradients sont mesurés, au milieu des éléments de volume, on se trouve rarement sur la surface d'isodensité qui correspond à une densité de référence qu'on cherche à montrer. On est bien capable de montrer les éléments de volume (6 à 9) dans lesquels passe cette surface d'isodensité, mais on est pas capable de calculer à coup sûr la vraie orientation de la normale à de cette surface : on n'en fait qu'une approximation liée au décalage entre la position de la surface vraie et l'endroit où on estime qu'elle se trouve (au centre de l'élément de volume).

D'une manière particulièrement flagrante, sur un autre profil 21, remplaçant par exemple le profil 16 sur la figure 2, on peut montrer que l'écart géométrique entre deux surfaces d'isodensité prises en compte, au lieu d'une seule, peut être égal à la hauteur d'un élément de volume entier. Ceci se remarque par les lieux des centres des éléments de volumes 7 et 8 très éloignés de la trace 21 de la surface vraie. Si les courbes d'isodensité étaient toutes parallèles les unes au autres, le phénomène serait peu visible. Mais ce n'est pas le cas. Le choix dans un cas, élément de volume 6 ou 7, d'une courbe d'isodensité et le choix dans un autre, 8 ou 9, d'une autre courbe d'isodensité peut conduire à présenter à l'endroit de la rupture, à l'endroit séparant les éléments de volume 7 et 8, une variation brutale de l'orientation de la surface visible attribuée à chacun des éléments de volume considérés. Le phénomène évoqué précédemment ne se produit pas aussi fortement mais il apparait néanmoins. On pourrait encore voir un artefact de courbe de niveau.

Pour remédier à cet inconvénient, on a eu l'idée d'effectuer une moyenne entre les gradients des éléments de volume situés près de la surface du volume segmenté. Par exemple maintenant on s'intéresse aussi aux éléments de volume respectivement 22 à 25, qui n'appartiennent pas à l'objet segmenté, mais qui sont situés au dessus des éléments de volume 6 à 9. On calcule aussi pour ces éléments de volume les trois composantes du gradient de leur information physique. Et on effectue ensuite une pondération entre les gradients des éléments de volume qui appartiennent à l'objet segmenté et les gradients de ceux voisins qui, par exemple, ne lui appartiennent pas pour déterminer les composantes de la normale à la surface visible attribuée a un élément de volume de la surface de l'objet.

Cette manière de faire a plusieurs conséquences. La première conséquence est d'amortir les variations des orientations des gradients. En définitive on neutralise l'effet perturbateur du calcul des gradients pour des éléments de volume situés sur des courbes d'isodensité différentes. C'est le but recherché. Ensuite si intuitivement on comprend qu'on peut utiliser l'ensemble des éléments de volume extérieurs, mais directement au contact de l'objet segmenté, on comprend aussi qu'on aurait pu faire la pondération en utilisant des éléments de volume intérieurs au volume segmenté et eux aussi directement au contact avec les éléments de volume constituant la surface de ce volume segmenté. Les deux solutions sont possibles.

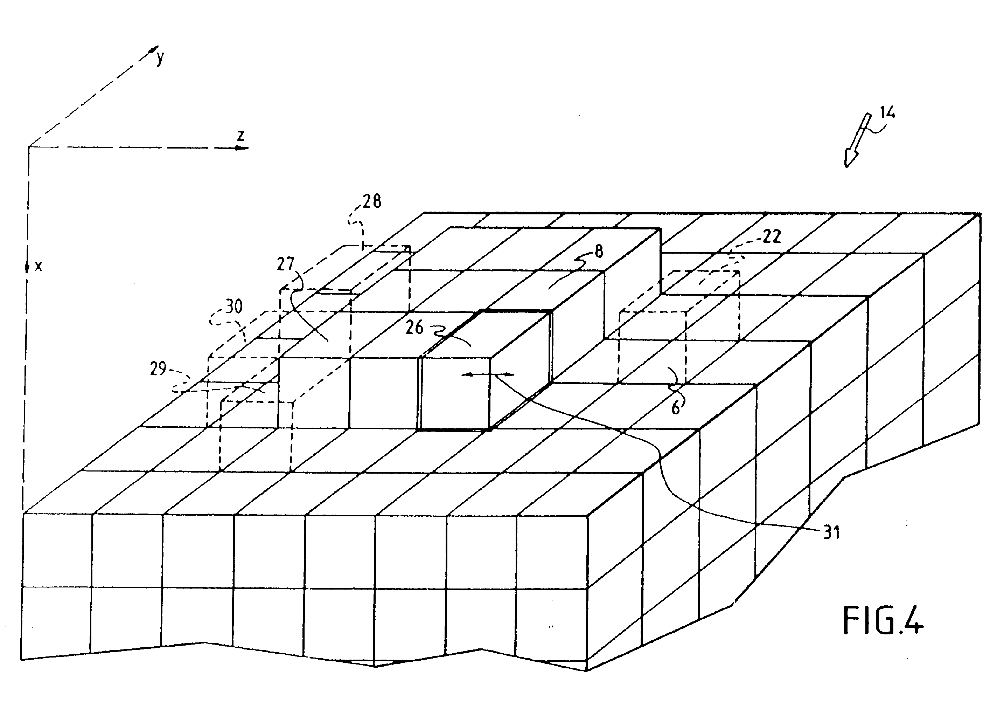

On peut choisir l'une ou l'autre des solutions, mais dans la pratique et dans la description qui suit on tient compte d'une pondération des gradients des éléments de volume de la surface de l'objet segmenté par les gradients des éléments de volume extérieurs à cet objet segmenté et directement en contact avec eux. La figure 4 montre, dans des conditions identiques à ce qui est décrit pour les figures 1a et 1b, ce que voit un observateur situé dans la position de celui qui regarde cette figure. On indique ainsi que le gradient de l'élément de volume 6 devrait être pondéré par le gradient d'un l'élément de volume 22 qui lui est superposé. En ce qui concerne l'élément de volume 8 le problème est un peu plus compliqué étant donné que cet élément de volume possède deux facettes appartenant à la surface de l'objet segmenté. Il a une facette orientée vers le haut de la figure et une facette orientée vers la droite de cette figure. Dans un cas plus général encore, un élément de volume tel que 26 pourra avoir trois facettes au contact d'éléments de volume n'appartenant pas au volume de l'objet segmenté. En théorie il peut même y en avoir jusqu'à 5. Ceci est aussi le cas d'un élément de volume 27 situé à gauche de la protubérance 4. Cet élément 27 possède cependant la particularité que pour trois facettes en contact avec l'environnement extérieur, deux seulement sont visibles de l'observateur.

Dans l'invention on tire partie de l'existence de ces facettes. D'une part on va donner, à chacune des facettes extérieures des éléments de volume de la surface, une surface élémentaire d'image representative dans l'image à reconstruire. On sait en particulier tenir compte d'un lieu d'observation (l'oeil du présent observateur de la figure) pour affecter, dans une image à construire, trois éléments adjacents de surface d'image à l'élément de volume 26 puisqu'on voit trois de ses facettes. L'allure de l'apparence des trois facettes de l'élément 26 est soulignée par un double trait. On sait aussi affecter deux éléments de surface d'image à l'élément de volume 27 puisqu'on ne voit que deux de ses facettes. On sait enfin n'affecter qu'un élément de surface d'image à l'élément de volume 6 puisqu'on ne voit qu'une seule de ses facettes. Ce type de calcul est connu et est par exemple publié dans
"Visualisation rapide de surfaces d'objets échantillonnés"
dû a MM. Yves TROUSSET et Francis SCHMITT et publié dans le compte-rendu des conférences du deuxième "Colloque image" Nice, Avril 1986. L'originalité de l'invention consiste à tenir compte de ces facettes apparentes pour attribuer, dans l'image représentée, des surfaces visibles à chacune d'elles et à considérer que l'orientation de ces surfaces visibles dépend par contre de la valeur des gradients des éléments de volume qui sont justement adjacents entre eux par ces facettes.

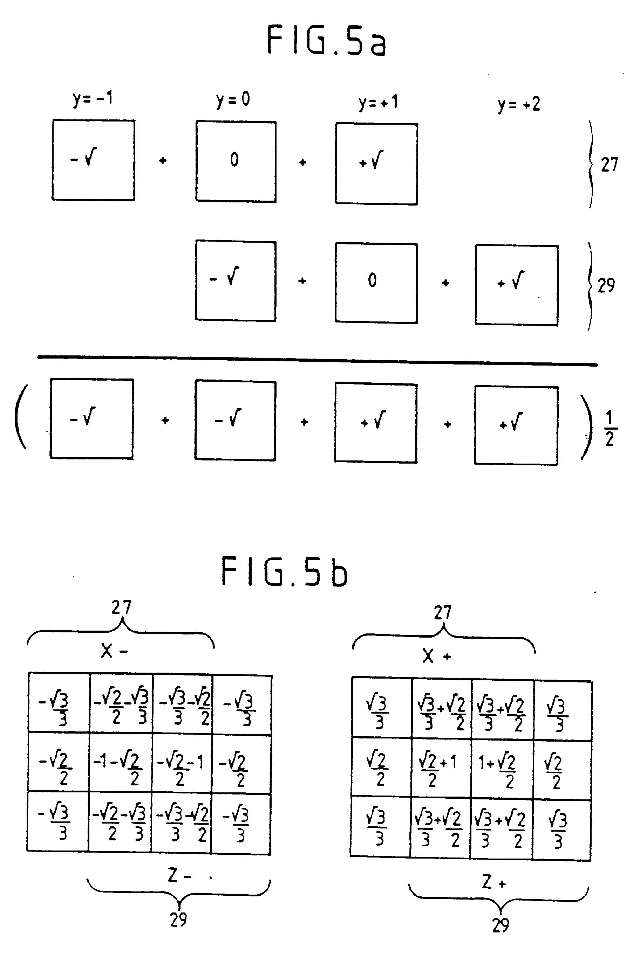

Ainsi pour la facette située au dessus de l'élément de volume 27, on calcule le gradient de l'information physique dans cet élément 27 ainsi que dans un élément 28 situé au dessus de l'élément 27 et qui lui est adjacent par cette facette supérieure. Pour la facette avant de l'élément de volume 27, on fait intervenir un élément de volume 29, qui lui est adjacent justement par cette facette avant. Bien que cela ne soit pas nécessaire, parce que la facette arrière ne sera pas visible dans la vue présentée avec l'orientation de la figure 5, on peut calculer néanmoins l'orientation d'une surface visible attribuée à la facette latérale gauche de l'élément de volume 27, en évaluant le gradient de l'information physique d'un élément de volume 30 situé à gauche de l'élément de volume 27.

En résumé, dans le procédé de l'invention, on effectue les opérations suivantes. On segmente. On calcule les gradients des éléments de volume appartenant à la surface de l'objet segmenté. On calcule également les gradients des éléments de volume, par exemple n'appartenant pas à l'objet segmenté, mais adjacents aux éléments de volume constituant la surface de cet objet segmenté par au moins une facette extérieure (ou intérieure) de ces éléments de volume. Et enfin on effectue la pondération des gradients de deux éléments de volume adjacents pris en considération, en attribuant la valeur pondérée à la facette d'adjacence . Les opérations de représentation sont ensuite classiques. On détermine une direction d'éclairement 14, on évalue la luminosité émise par une facette qui aurait une orientation determinée, cette orientation étant définie par le gradient pondéré. Et on construit l'image de la vue. Dans cette image, les éléments de surface de l'image sont situés, vis à vis de l'observateur, à l'endroit des facettes des éléments de volume visibles par l'observateur.

Dans la pratique le calcul de gradient peut être fait plus simplement. A partir de l'objet segmenté on peut connaître dès le départ par un traitement classique les facettes qui sont normalement orientées vers l'espace extérieur, non segmenté, de l'objet segmenté. Dans ces conditions on peut modifier directement le calcul du gradient de manière à ne faire qu'en une fois le calcul du gradient pondéré. En reprenant la figure 3a, et en transposant son enseignement dans la figure 5a, on peut considérer que la première ligne de cette figure 5a représente schématiquement les pondérations à affecter aux éléments de volume voisins de l'élément de volume 27 pour calculer la composante selon Y de son gradient. La deuxième ligne correspond à un même calcul, effectué par contre pour l'élément de volume 29 qui lui est adjacent par sa facette visible supérieure. Dans une pondération simple, où chacun des gradients intervient pour moitié, on peut considérer que le gradient de la facette est égal à la demie somme de ces deux gradients. Dans les carrés le symbole racine représente les pondérations, affectées aux valeurs des informations physiques, et représentées respectivement sur les figures 3b à 3d. La troisième ligne de la figure 5A montre schématiquement la demie somme des gradients à affecter à la facette : tous les éléments de volume doivent subir un même type de combinaison. Il est alors possible de prévoir dans l'ordinateur de traitement un opérateur spécialisé qui effectue ce calcul. On y gagne du temps. La figure 5b montre le calcul de composantes selon X (ou selon Z) en fonction des éléments de volume 27 et 29 considérés. Le symbolisme + ou - détermine, dans le sens de la composante calculée, les interventions des différents plans d'éléments de volume : en arrière ou en avant de l'élément de volume concerné. Pour ces calculs aussi un autre opérateur spécialisé peut être programmé dans l'ordinateur

En ce qui concerne la représentation proprement dite on se limite dans l'explication ci-dessous à un effet de diffusé de lumière renvoyé par les facettes visibles des éléments de volume constituant, selon l'invention, les surfaces visibles de ces éléments de volume. On rappelle qu'une facette diffuse de la lumière dans toutes les directions d'une manière égale, mais que cette diffusion est plus ou moins intense en fonction de l'orientation de cette facette par rapport à la direction d'où provient l'éclairement (14). Cette simplification permet de ne pas tenir compte du point de vue d'observation de l'objet segmenté pour le calcul de la luminosité de la facette. En admettant que cette fonction de diffusion est proportionnelle au cosinus de l'angle d'incidence de la direction d'éclairement avec la normale aux facettes, on approche rapidement de la luminosité de cette facette en effectuant le produit scalaire d'un vecteur unitaire représentatif de la direction d'éclairement avec le gradient attaché à cette facette. On sait très bien effectuer les produits scalaires dans un ordinateur.

On pourrait s'intéresser également à un effet de réflexion de la lumière, dans lequel interviennent l'orientation de la facette, l'orientation de l'éclairement, mais aussi la position du point de vue de l'observation. Un oeil situé à ce point de vue reçoit d'autant plus de lumière réfléchie en provenance d'une facette que la normale à cette facette s'approche d'une direction voisine de la bissectrice de l'angle formé par la direction d'observation et la direction d'éclairement. On peut également tenir compte d'un effet de proximité de l'observateur à l'objet segmenté. Il est en effet connu de proposer des images de vues comme si elles étaient observées à une distance égale à 1000 où 1500 fois la dimension élémentaire d'un élément de volume. On applique alors à la luminosité calculée pour chaque facette, ou ce qui revient au même, pour chaque surface élémentaire de l'image à construire, un coefficient pondérateur affine, c'est à dire dépendant de la distance de l'observateur à chacun des éléments de volume représentés.

Il peut arriver, que le produit scalaire de la normale par la direction d'éclairement soit négatif. Ceci signifie que la facette ne devrait pas être éclairée par l'éclairement, alors que cette facette est visible de l'observateur. C'est par exemple le cas, figure 4, du front 31 visible de l'observateur alors qu'il n'est pas éclairé par l'éclairement 14. Dans ces conditions on peut modifier un petit peu l'éclairement en ne le faisant plus seulement provenir selon une direction 14, mais en lui ajoutant par exemple une composante de luminosité ambiante. Il en résulte que la luminosité affectée à chaque élément de surface pour chaque facette peut être du type :

$$(1 + \vec{N}.\vec{L})^{p/2}$$

où N représente le gradient (qu'il soit pondéré ou non), où L représente la direction d'éclairement, et où p représente un coefficient adoucissement de la dureté d'effets de contraste obtenus avec une telle loi de diffusion trop simplifiée. La précision obtenue dans le calcul de la normale à la surface permet cependant d'utiliser, en plus de l'effet de diffusion, un effet de réflexion et ainsi par le choix de paramètres pondérateurs de modifier l'apparence de la matière visualisée.

**Revendications**

1 - Procédé de représentation d'images de vues d'un objet (Fig. 1a) à discriminer dans un volume numérique, ce volume comportant des éléments de volume chargés (3) d'au moins une information physique, ce procédé comportant les étapes suivantes :

– on segmente le volume numérique selon un critère de segmentation permettant de choisir des éléments de volume en fonction de la valeur des informations physiques dont ils sont chargés et de manière à extraire ainsi de ce volume numérique un objet segmenté,

– on attribue à chaque élément de volume choisi et situé à la surface de l'objet segmenté une surface visible,

– on évalue la contribution (14) de cette surface visible à la vue à représenter,

– on construit une image lumineuse avec des éléments de surface, dont les lieux dans l'image représentent les lieux dans l'objet segmenté des éléments de volume choisis et situés à la surface de cet objet segmenté, et dont les luminosités représentent les contributions des surfaces visibles attachées à ces éléments de volume choisis et situés à la surface de l'objet segmenté, caractérisé en ce que

– on attribue comme surface visible, à chaque élément de volume choisi et situé à la surface de l'objet segmenté, les facettes de cet élément au contact de l'environnement, intérieur ou extérieur, de cette surface de l'objet segmenté, et en ce que on évalue la contribution de chacune de ces facettes des éléments de volume choisis et situées à la surface de l'objet segmenté en fonction du gradient vrai et intrinsèque de l'information physique, à l'endroit des éléments de volume correspondant, ce gradient étant indépendant d'une direction d'éclairement de ces facettes.

2 - Procédé selon la revendication 1 caractérisé en ce qu'on attribue comme surface visible à chaque élément de volume choisi et situé à la surface de l'objet segmenté l'ensemble des facettes apparentes de cet élément de volume qui n'appartiennent pas par ailleurs à un autre élément de volume de l'objet segmenté.

3 - Procédé selon la revendication 1 caractérisé en ce qu'on évalue la contribution d'une surface visible d'un élément de volume en fonction du gradient vrai et intrinsèque de l'information physique à l'endroit, et au voisinage, de cet élément de volume.

4 - Procédé selon la revendication 1 caractérisé en ce que pour évaluer on évalue la contribution de chacune des facettes apparentes en fonction d'une mesure d'orientation de ces facettes apparentes, et en ce qu'on mesure l'orientation de ces facettes apparentes en calculant une normale à ces facettes à partir des valeurs des gradients des informations physiques qui sont chargées dans les éléments de volume situés de part et d'autre de cette facette.

5 - Procédé selon la revendication 4 caractérisé en ce qu'on mesure l'orientation des facettes apparentes en calculant une normale à ces facettes en fonction de valeurs d'informations physiques chargées dans des éléments de volume situés de part et d'autre de ces facettes.

6 - Procédé selon l'une quelconque des revendications 1 à 5 caractérisé en ce que pour attribuer les facettes apparentes on prend en considération la forme de l'objet (27) segmenté et la position d'un point de vue (27) duquel on est censé voir l'objet.

7 - Procédé selon l'une quelconque des revendications 1 à 5 caractérisé en ce qu'on calcule pour chaque facette apparente le lieu d'un élément de surface qui lui correspond dans l'image et la luminosité de cet élément de surface qui correspond à la contribution de cette facette.

**Patentansprüche**

1. Verfahren zur Sichtbarmachung von Ansichten eines Objektes (Figur 1a), das innerhalb eines digitalen Volumens zu unterscheiden ist, wobei dieses Volumen mit mindestens einer physikalischen Information beladene Volumenelemente (3) umfaßt, wobei das Verfahren die folgenden Schritte umfaßt:

– man segmentiert das digitale Volumen gemäß einem Segmentierungskriterium, das das Auswählen von Volumenelementen in Abhängigkeit von dem Wert der physikalischen Informationen zuläßt, mit denen sie beladen sind und so, daß man auf diese Weise aus diesem digitalen Volumen ein segmentiertes Objekt extrahiert,

– man ordnet jedem gewählten, an der Oberfläche des segmentierten Objektes liegenden Volumenelement eine sichtbare Oberfläche zu,

– man wertet den Beitrag (14) dieser sichtbaren Oberfläche der darzustellenden Ansicht aus,

– man bildet ein Leuchtbild aus den Oberflächenelementen unter Benutzung von Elementen, deren Orte im Bild die Orte im segmentierten der ausgewählten, an der Oberfläche des segmentierten Objektes liegenden Volumenelemente darstellen, und deren Heiligkeiten die Beiträge der sichtbaren, diesen Volumenelementen zugeordneten Oberflächen darstellen, dadurch gekennzeichnet, daß

– als sichtbare Oberfläche man jedem ausgewählten, an der Oberfläche des segmentierten Objektes liegenden Volumenelement die Facetten dieses Elements bei der Berührung mit der inneren oder äußeren Umgebung der Obefläche dieses segmentierten Objekts zuordnet, daß man den Beitrag jeder dieser Facetten der ausgewählten, und der Oberfläche es Objekts liegenden Volumenelemente in Abhängikeit von der wahren unbezogenen Gradienten der physikalische Information am Ort der entsprechenden Volumenelemente auswertet, wobei dieser Gradient von der Richtung der Ausleuchtung der Facetten unabhängig ist.

2. Verfahren nach Anspruch 1, dadurch gekennzeichnet, daß man jedem ausgewählten, an der Oberfläche des segmentierten Objektes liegenden Volumenelement als sichtbare Oberfläche die Gesamtheit der scheinbaren Facetten dieses Volumenelements zuordnet, die sonst keinem anderen Volumenelement des segmentierten Objekts gehören.

3. Verfahren nach Anspruch 1, dadurch gekennzeichnet, daß man den Beitrag einer sichtbaren Oberfläche eines Volumenelements in Abhängigkeit von der wahren unbezogenen Gradienten der physikalischen Information am Ort und in der Umgebung dieses Volumenelements auswertet.

4. Verfahren nach Anspruch 1, dadurch gekennzeichnet, daß bei der Auszuwertung man den Beitrag jeder der scheinbaren Facetten in Abhängigkeit von einer Messung der Ausrichtung dieser scheinbaren Facetten mißt und daß man die Ausrichtung dieser scheinbaren Facetten auswertet, indem man eine Senkrechte zu diesen Facetten auf Basis der Werte der Gradienten des physikalischen Informationen ausrechnet, die in die beidseits dieser Facette liegenden Volumenelemente geladen sind.

5. Verfahren nach Anspruch 4, dadurch gekennzeichnet, daß man die Ausrichtung dieser Facetten, mißt, indem man eine Senkrechte zu diesen Facetten in Abhängigkeit von der physikalischen Informationen ausrechnet, die in die beidseits dieser Facetten liegenden Volumenelemente geladen sind.

6. Verfahren nach einem der vorhergehenden Ansprüche 1 bis 5, dadurch gekennzeichnet, daß für die Angleichung der scheinbaren Facetten man die Gestalt des segmentierten Objekts (27) sowie die Position eines Sichtpunkts (27) berücksichtigt, vom dem man annimmt, daß von dort aus man das Objekt sieht.

7. Verfahren nach einem der vorhergehenden Ansprüche 1 bis 5, dadurch gekennzeichnet, daß man für jede scheinbare Facette den Ort eines Oberflächenelements berechnet, das im Bild und in der Heiligkeit dieses dem Beitrag dieser Facette entsprechenden Oberflächenelements ihm entsprechen.

**Claims**

1. Process for representing images of an object (Fig. 1a) to be discriminated in a numerical volume, this volume comprising volume elements (3) charged with at least one physical information, this processing comprising the following stages:
   – segmenting the numerical volume according to a segmentation criterion enabling volume elements to be selected as a function of the value of the physical information with which they are charged and thus enabling a segmented object to be extracted from the said numerical volume;
   – attributing a visible surface to each volume element selected and situated on the surface of the segmented object;
   – evaluating the contribution (14) of this visible surface to the image to be represented;
   – constructing a luminous image with surface elements of which the positions in the image represent the positions in the segmented object of the volume elements selected and situated on the surface of this segmented object and of which the luminosities represent the contributions of the visible surfaces attached to these volume elements selected and situated on the surface of the segmented object,
   characterized in that
   – to each volume element selected and situated on the surface of the segmented object, those facets of this element which are in contact with the internal or external environment of this surface of the segmented object are attributed as the visible surface, and the contribution of each of these facets of the volume elements selected and situated on the surface of the segmented object are evaluated as a function of the true and intrinsic gradient of the physical information in the corresponding locality of the volume elements, this gradient being independent of an illumination direction of these facets.

2. Process according to Claim 1, characterized in that all those apparent facets of the volume element which do not belong elsewhere to another volume element of the segment object are attributed as the visible surface to each volume element selected and situated on the surface of the segmented object.

3. Process according to Claim 1, characterized in that the contribution of a visible surface of a volume element is evaluated and evaluated as a function of the true and intrinsic gradient of the physical information in the locality and vicinity of this volume element.

4. Process according to Claim 1, characterized in that for purposes of evaluation the contribution of each of the apparent facets is evaluated as a function of an orientation measurement of these apparent facets and that the orientation of these apparent facets is measured by calculating a normal line to these facets starting from the values of the gradients of the physical information with which the volume elements situated on each side of this facet are charged.

5. Process according to Claim 4, characterized in that the orientation of the apparent facets is measured by calculating a normal line to these facets as a function of physical information values with which volume elements situated on the two sides of these facets are charged.

6. Process according to any one of Claims 1-5, characterized in that for the purpose of attributing the apparent facets the shape of the segmented object (27) and the position of viewing point (27) from which the object is assumed to be viewed.

7. Process according to any one of Claims 1-5, characterized in that for each apparent facet a calculation is made of the position of a surface element corresponding to it in the image and the luminosity of this surface element which corresponds to the contribution of the said facet.

FIG.1a

EP 0 348 434 B1

FIG.1b

EP 0 348 434 B1

FIG.2

FIG.3a

$y = -1$

| | | |
|---|---|---|
| $-\dfrac{\sqrt{3}}{3}$ | $-\dfrac{\sqrt{2}}{2}$ | $-\dfrac{\sqrt{3}}{3}$ |
| $-\dfrac{\sqrt{2}}{2}$ | $-1$ | $-\dfrac{\sqrt{2}}{2}$ |
| $-\dfrac{\sqrt{3}}{3}$ | $-\dfrac{\sqrt{2}}{2}$ | $-\dfrac{\sqrt{3}}{3}$ |

FIG.3b

$y = 0$

| | | |
|---|---|---|
| 0 | 0 | 0 |
| 0 | 0 | 0 |
| 0 | 0 | 0 |

FIG.3c

$y = 1$

| | | |
|---|---|---|
| $\sqrt{3}/3$ | $\sqrt{2}/2$ | $\sqrt{3}/3$ |
| $\sqrt{2}/2$ | 1 | $\sqrt{2}/2$ |
| $\sqrt{3}/3$ | $\sqrt{2}/2$ | $\sqrt{3}/3$ |

FIG.3d

FIG.4

# FIG.5a

# FIG.5b